# EUROPEAN PATENT APPLICATION

(11) **EP 1 150 200 A2**
(43) Date of publication of application: **31.10.2001**
(21) Application number: 01109934.8
(22) Date of filing: 24.04.2001
(51) Int. Cl.: G06F 3/12

(54) **Print control apparatus, and storage medium**

(30) Priority: 27.04.2000 JP 2000127751; 28.04.2000 JP 2000131286
(71) Applicant: CANON KABUSHIKI KAISHA, Ohta-ku, Tokyo (JP)
(72) Inventor: Kawamoro, Hirokazu, c/o Canon Kabushiki Kaisha, Tokyo (JP); Iida, Mitsunori, c/o Canon Kabushiki Kaisha, Tokyo (JP)
(74) Representative: Leson, Thomas Johannes Alois, Dipl.-Ing.

(57) **Abstract**

A technique is disclosed for obtaining printed copies in a plurality of different formats such as OHP transparency copies for use by a presenter in a presentation and copies to be distributed among participants in the presentation, simply by a single print job. Input data to be printed is temporarily stored in a memory. First print data to be printed in a first printing format and second print data to be printed in a second printing format are produced from the data stored in the memory. A single set of print data is then produced from the first print data and the second print data.

## Description

### BACKGROUND OF THE INVENTION

### Field of the Invention

The present invention relates to an information processing apparatus, a print control apparatus, a method for controlling such an apparatus, and a storage medium. More particularly, the present invention relates to an information processing apparatus such as a personal computer, a print control apparatus such as a printer or a printer controller, a method of controlling such an apparatus, and a printer driver program.

### Description of the Related Art

In a conventional technique of printing a document produced by an application on a computer, when it is desired to print the document in a plurality of different formats, it is needed to perform printing as many times as the number of formats and it is needed to specify a format each time the printing is performed. For example, in the case where a document is printed on one or more OHP transparency sheets which are to be used by a presenter in a presentation and also printed on one or more sheets of usual paper in an N-up (N-pages/sheet) format which are to be distributed among participants in the presentation, printing on transparency sheets is first performed, and then, after changing the setting of a printer driver or application software, printing of the distribution document in the N-up format is preformed to obtained a desired number of sets of documents to be distributed.

However, execution of a printing operation a plurality of times imposes a large load upon a user. Furthermore, it is not easy for a user who is not familiar with the operation to specify various different printing formats.

In a system in which a printer is shared by a plurality of users, as is the case with a network printer, performing printing two or more times can cause a problem that a printed sheet for another user is inserted between OHP transparency sheets and sheets printed for distribution and thus the user has to do an additional job to sort them.

In the case where a memo space or the like is created on a page of the document for distribution, it is needed to produce modified document data using application software.

### SUMMARY OF THE INVENTION

In view of the above problems, it is a first object of the present invention to provide a technique of printing in different formats only by performing one printing job.

It is a second object of the present invention to provide a technique of producing a plurality of print jobs associated with a single piece of data to be printed and corresponding to a plurality of output formats-simply by issuing a single print execution command.

According to an aspect of the present invention, to achieve the first object described above, there is provided a print control apparatus for performing a printing operation in accordance with print data received from an information processing apparatus, comprising: storing means for storing print data included in a print job; printing-in-original-layout means for performing a printing process such that one logical page is printed on one printing medium in accordance with the print data; printing-in-modified-layout means for performing a printing process such that a plurality of logical pages are printed on one printing medium in accordance with the print data; and deleting control means which retains the print data in the storing means after one of the printing processes is completed and which deletes the print data from the storing means when both printing processes are completed.

According to another aspect of the present invention, there is provided an information processing apparatus for producing print data to be printed by a printing apparatus, comprising: spooling means for temporarily storing input data to be printed; determining means for determining a printing mode which has been set; image representing data producing means for, in the case where the determining means determines that a predetermined printing mode has been set, producing first image representing data to be subjected to first formatting and second image representing data to be subjected to second formatting, on the basis of the data stored in the spooling means; and print data producing means for producing one set of print data from the first image representing data and the second image representing data produced by the image representing data producing means.

According to another aspect of the present invention, to achieve the second object described above, there is provided a print control apparatus comprising: setting means capable of setting a plurality of output formats for one piece of data to be printed; producing means for producing, from the data to be printed, a plurality of print jobs including print data corresponding to the plurality of output formats set by the setting means; and execution control means for controlling execution such that printing is executed in accordance with the plurality of print jobs produced by the producing means.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 is a block diagram illustrating the construction of an information processing apparatus and a print control apparatus according to an embodiment of the present invention;
Fig. 2 is a block diagram illustrating typical modules of an information processing apparatus, for producing print data;
Fig. 3 is a block diagram illustrating a memory map of a RAM of a host computer, in a state in which printing modules including a printing program according to an embodiment of the present invention are loaded in the RAM so that they be can be executed;
Fig. 4 illustrates an example of a user interface window for setting a condition in a presentation mode according to the embodiment of the present invention;
Fig. 5 is a diagram illustrating an example of the content of print data produced in a normal printing mode;
Fig. 6 is a diagram illustrating an example of the content of print data produced in accordance with a first embodiment of the present invention, when a presentation mode is selected;
Fig. 7 is a diagram illustrating an example of print data output from a host computer in the presentation mode and also illustrating an example of an output from a printer, according to the first embodiment;
Fig. 8 is a flow chart illustrating a printing operation performed by the host computer, according to the first embodiment of the present invention;
Fig. 9 is a flow chart illustrating a printing operation performed by the host computer, when the presentation mode is selected, according to the first embodiment of the present invention;
Fig. 10 is a flow chart illustrating steps, in the printing operation according to the first embodiment of the present invention, for determining whether printing is to be performed in the presentation mode or the normal mode;
Fig. 11 is a flow chart illustrating the details of the process performed in the presentation mode, in the printing operation performed by a printer according to the first embodiment of the present invention;
Fig. 12 is a diagram illustrating an example of a user interface window for setting the details of the presentation mode;
Fig. 13 is a diagram illustrating a document produced by an application and a set of distribution copies printed such that memo spaces are created on each sheet;
Fig. 14 is a block diagram illustrating modules of an information processing apparatus, for producing print data according to a second embodiment of the present invention;
Fig. 15 is a flow chart illustrating a process of producing print data, performed by an information processing apparatus, according to second embodiment of the present invention;
Fig. 16 is a diagram illustrating an example of the content of print data produced by a printer driver in a normal printing mode and also illustrating an example of the content of print data produced in the presentation mode according to the second embodiment of the present invention;
Fig. 17 is a diagram illustrating an example of a set of print jobs which is produced in a mode (presentation mode) in which a plurality of print jobs are produced from one piece of data to be printed;
Fig. 18 is a diagram illustrating print jobs which are produced in a printing operation to obtain six sets of copies for distribution when the presentation mode has been set via the window shown in Fig. 4; and
Fig. 19 is a flow chart illustrating a process performed by a spool file manager according to a third embodiment of the present invention.

### DESCRIPTION OF THE PREFERRED EMBODIMENTS

The present invention is described in further detail below with reference to preferred embodiments. In the embodiments described below, it is assumed that printing is performed in a presentation mode which is one of features of the present invention. Herein, the printing in the presentation mode refers to a printing operation in which printing on one or more OHP transparency sheets which are to be used by a presenter in a presentation (hereinafter, such a printing operation will be referred to simply as printing on transparency sheets) and printing on one or more sheets of usual paper which are to be distributed among participants in the presentation (hereinafter, such a printing operation will be referred to simply as printing of a distribution document) are performed in a single printing operation.

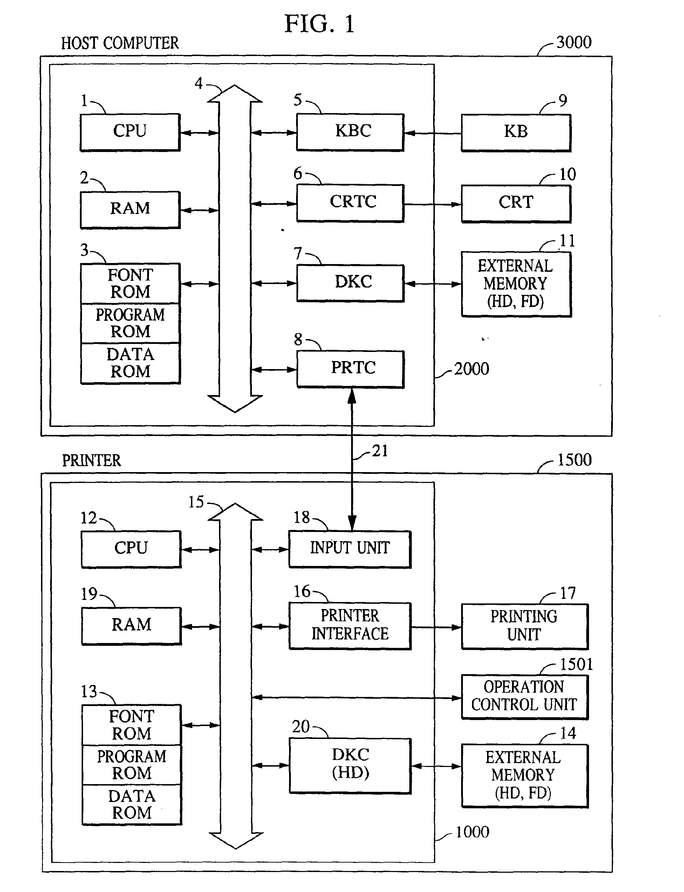

Fig. 1 is a block diagram illustrating the construction of a printer control system according to an embodiment of the present invention. Note that the present invention may be applied to a single apparatus, a system including a plurality of apparatuses, or a system including a plurality of apparatuses connected to one another via a network such as a LAN or a WAN, as long as the apparatus or the system is capable of executing a function according to the present invention, unless otherwise stated.

In Fig. 1, reference numeral 3000 denotes a host computer serving as an information processing apparatus. The host computer 3000 includes a CPU 1 for precessing document data including a mixture of graphic data, image data, character data, and a table (calculation table), in accordance with a document processing program stored in a program ROM in a ROM 3 or in an external memory 11. The CPU 1 also controls respective devices connected to a system bus 4. An operating system program (OS) which is a program for controlling the CPU 1 is stored in the program ROM in the ROM 3 or in the external memory 11. Font data used in the document processing is stored in a font ROM in the ROM 3 or in the external memory 11. Various data used in the document processing are stored in a data ROM in the ROM 3 or in the external memory 11. A printer driver program according to the present invention is also stored in the program ROM in the ROM 3 or in the external memory 11.

A RAM 2 is used by the CPU 1 as a main memory or a work area. A keyboard controller (KBC) 5 controls an inputting operation performed via a keyboard 9 or a pointing device (not shown). A CRT controller (CRTC) 6 controls a displaying operation of a CRT display (CRT) 10. A disk controller (DKC) 7 controls accessing to the external memory 11 such as a hard disk (HD) or a floppy disk (FD) on which a boot program, various applications, font data, a user file, an edit file, a printer control command producing program (hereinafter referred to as a printer driver) and the like are stored. A printer controller (PRTC) 8 connected to a printer 1500 via a bidirection interface 21 serves to controls communication with the printer 1500. The CPU 1 also executes the operation of converting (rasterizing) display information into outline font data in the RAM 2 so that the information is displayed in a WYSIWYG fashion on the CRT 10. The CPU 1 opens one or more windows in response to a command issued by clicking a mouse cursor (not shown) displayed on the CRT 10 and executes specified data processing. Before executing a printing operation, a user can open a printer setting window to perform setting associated the printer, selection of a printing mode, and setting associated with the printer driver.

In the printer 1500 including the print control apparatus according to the present invention, a printer CPU 12 outputs an image signal serving as output information to a printing unit (printer engine) 17 connected to a system bus 15 in accordance with a control program stored in the program ROM in the ROM 13 or a control program stored in an external memory 14. The program ROM in the ROM 13 serves to store the control program or the like used by the CPU 12. A font ROM of the ROM 13 stores font data or the like which is used to generate the output information. In the case of a printer which does not have the external memory 14 such as a hard disk, a data ROM in the ROM 13 is used to store information used by the host computer. The CPU 12 is capable of communicate with the host computer via an input unit 18 to transmit information from the printer to the host computer 3000. A print control program according to the present invention is stored in the program ROM in the ROM 13 or the external memory 14.

A RAM 19 is used by the CPU 12 as a main memory or a work area. The storage capacity of the RAM 19 can be increased by attaching an optional RAM to an extension port. The RAM 19 is also used as an output information storage area, an environment data storage area, and an NVRAM. Accessing to the external memory 14 such as a hard disk (HD) or an IC card is controlled by a memory controller (MC) 20. The external memory 14 is connected as an optional device to store data such as font data, an emulation program, or form data. On an operation control panel 18, there are disposed operation control devices such as a switch and an LED indicator. The number of external memories is not limited to one, but two or more external memories may be connected to store, in addition to the built-in font, optional font data, a program for interpreting a printer control language for a different language, or the like. Furthermore, there may be also provided an NVRAM (not shown) for storing printer mode setting information input via the operation control panel 1501. In Fig. 1, reference numeral 1000 denotes a print control apparatus for controlling the basic operation of the printer 1500.

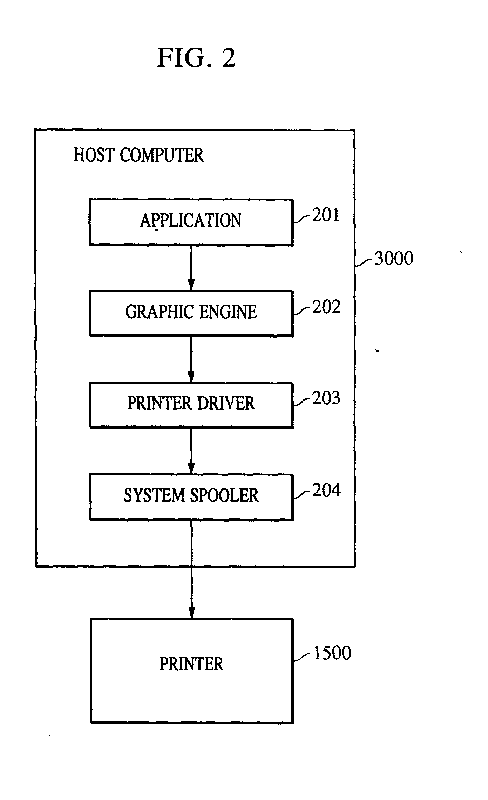

Fig. 2 illustrates typical software modules of a host computer which is directly connected, or indirectly connected via a network, to a printing apparatus such as a printer. In Fig. 2, an application 201, a graphic engine 202, a printer driver 203, and a system spooler 204 are program modules which area stored in the form of files in the external memory 11 and which are loaded into the RAM 2 and executed by the OS or another module. The application 201 and the printer driver 203 may be installed on the external memory 11 such as an HD, a floppy disk, a CD ROM (not shown), or a network (not shown). The application 201 stored in the external memory 11 is executed after being loaded into the RAM 2. When the application 201 performs a printing operation using the printer 1500, print data is output via the graphic engine 202 loaded in the RAM 2. The graphic engine 202 also loads the printer driver 203 prepared for each printing apparatus into the RAM 2 from the external memory 11 and converts the data output from the application 210 into a printer control command using the printer driver 203. The resultant printer control command is output via the interface 21 to the printer 1500 by the system spooler 204 loaded by the OS into the RAM 2.

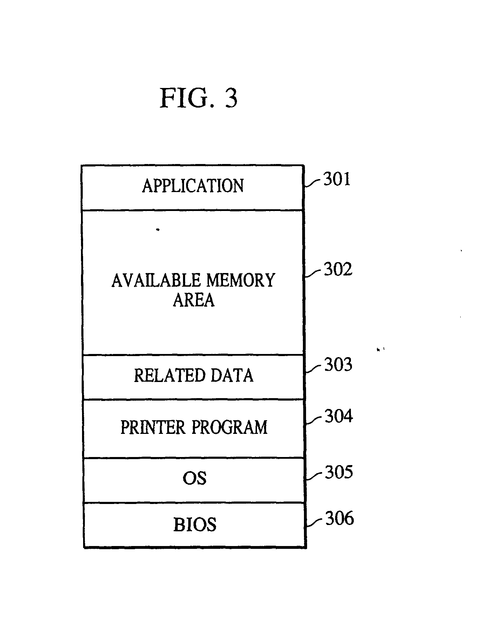

Fig. 3 shows the memory map of the RAM 2 of the host computer 3000 in a state in which the printing-program according to the present embodiment is loaded in the RAM 2. Note that in the present embodiment, the print control program is a part of the print program 1104.

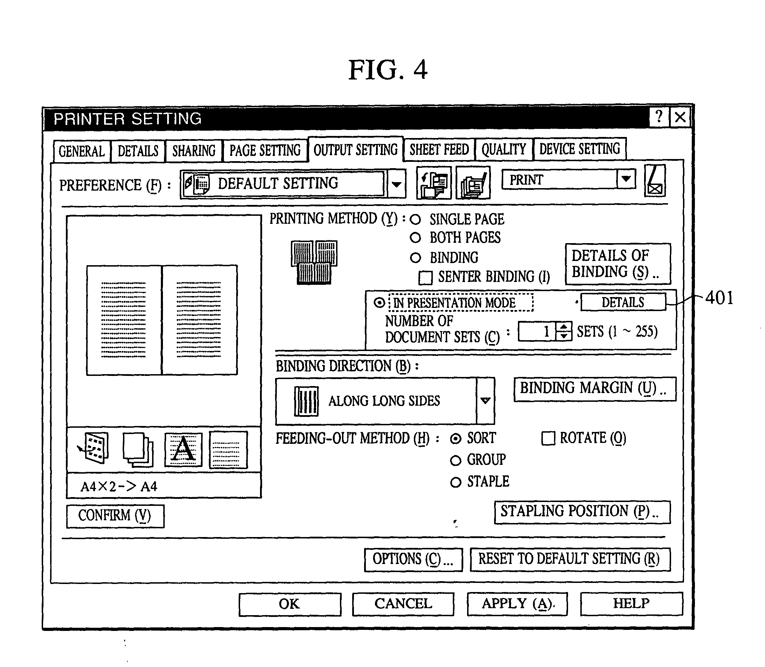

Fig. 4 illustrates a user interface screen, which is displayed by the printer driver serving as the print control program according to the present embodiment so that user can set conditions of the presentation mode via this screen. This screen is displayed when a tab of "property of the printer driver" is clicked in a dialog window which is opened when printing is performed in the application. This driver property window includes a plurality of sub windows titled "general", "details", and "sharing" provided by the OS and also includes sub windows titled "page setting", "output format setting", "sheet feed", "quality", and "device setting" provided by the printer driver. A user can set the printing condition in terms of various items via these sub windows. Although not shown in the figure, the setting of page layout (X pages/sheet) for all pages in the normal printing mode can be performed via the "page setting" sub window. In the presentation mode, the setting of page layout specified via the "page layout" sub window is reflected in the layout in printing of sheets for presentation. The layout of documents for distribution will be described later.

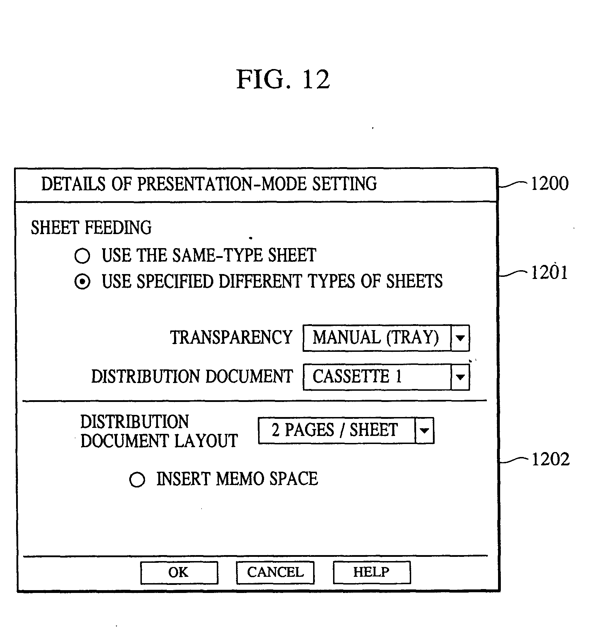

In the specific example shown in Fig. 4, the "output format setting" sub window is opened. In this sub window, one of a "single-side" printing mode, a "both-sides" printing mode, and a "binding" printing mode can be selected. In addition, the "presentation mode" can be turned on/off. In the case where a presentation mode radio button is turned on, the number of sets of documents for distribution can be specified within the range from 1 to 255. If the "details" tab 401 is clicked, a sub window for the detailed setting of the presentation mode is opened. The detailed setting of the presentation mode is described below with reference to Fig. 12.

Fig. 12 illustrates the sub window 1200 for the detailed setting of the presentation mode. This sub window has an area 1201 used to specify a sheet feeding manner and an area 1202 used to specify distribution document layout.

In the sheet feeding specification area 1201, it is possible to select, by turning on one of radio buttons, whether a document is to be printed on the same-type sheets for both presentation and distribution or printed on specified different types of sheets. Depending upon which radio button is turned on, sheet tray/cassette setting boxes are switched. In the specific example shown in Fig. 12, because it is specified to print on different types of sheets for presentation and distribution, it becomes possible to specify trays or cassettes from which transparency sheets and distribution document sheets are fed. In the default setting, a transparency sheet is fed from a "manual tray", and a distribution document sheet is fed from a "cassette-1". As shown in Fig. 12, the sheet feeding manner is specified via pull-down menus via which one of "manual (tray)" feeding, "cassette-1", "cassette-2", "cassette-3", and "automatic" feeding can be selected.

In the distribution document layout specification area 1202, it is possible to specify the page layout for a distribution document. The page layout is the same as that specified for the print job, and one of "1 page/sheet", "2 pages/sheet", "4 pages/sheet", "6 pages/sheet", "8 pages/sheet", "9 pages/sheet", and "16 pages/sheet" can be selected. The page layout can also be specified via a "page layout" pull-down menu in the "page setting" sub window.

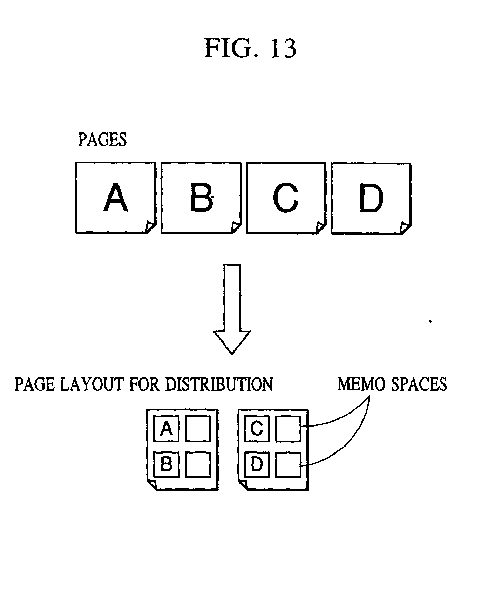

In this sub window, it is also possible to specify whether or not a memo space is created on a page. If memo space creation is specified, one logical blank page is inserted as a memo space after each original logical page. For example, when "4 pages/sheet" is specified as the page layout, if memo space creation is specified, print data is produced such that two original logical pages and two logical blank pages for memo spaces are placed on each physical page as shown in Fig. 13.

As described above, when a user selects the presentation mode via the user interface window provided by the printer driver, a print job can be executed such that printing is performed in a plurality of different layouts. Printing in the presentation mode is described in further detail below with reference to specific embodiments.

### First Embodiment

In a first embodiment, a printing operation is described for the case where the presentation mode is selected via the user interface window provided by the printer driver and printing is performed in the presentation mode by the printer 1500 serving as the print control apparatus.

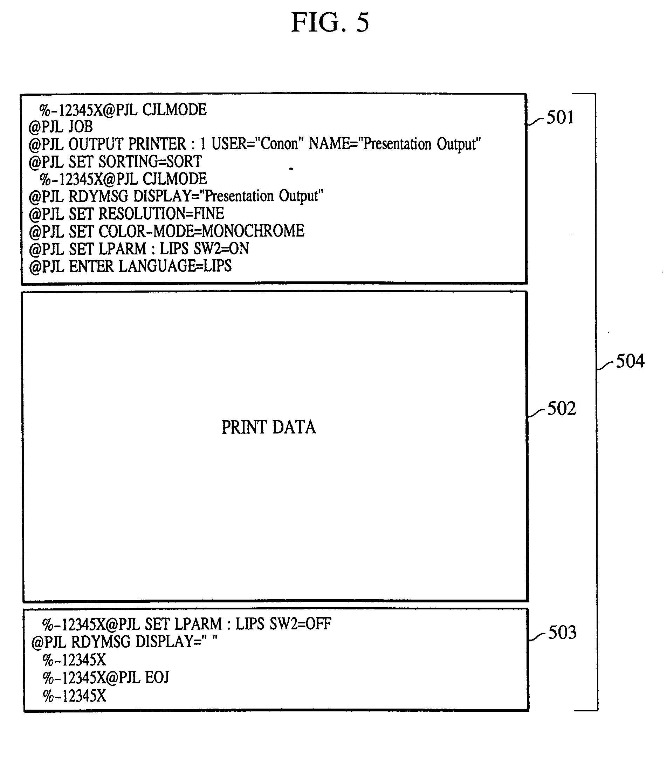

The structure of print data which is output from the host computer 3000 serving as a client to the printer 1500 including the print control apparatus is described. Fig. 5 illustrates the content of print data which is usually produced by the printer driver 203 when printing is performed.

In Fig. 5, reference numeral 501 denotes a header of a print job 504, wherein job initialization commands are described in the header 501. The header 501 is described in a versatile code called PJL (Print Job Language) which does not depend upon a particular printer language. In this header, a user name, a job name, a resolution, a color mode, and a printer language are described. The content described in PJL can be interpreted by even a device such as a print server which cannot interpret the printer language, and the print server can display the content of the header to present job information to the respective clients.

Reference numeral 502 denotes print data which is to be printed and which is described by the printer driver 203 in a printer language depending upon the device. Specific examples of printer languages include LIPSIV (registered trademark) and PCL5e (registered trademark). For a device such as a print server which cannot interpret the printer language, the print data looks like a black box. The content of the print data is not interpreted by the print server and is interpreted by the printer when it is printed.

Reference numeral 503 denotes a footer of the print job, wherein job ending commands are described in the footer 503. The job ending commands in the footer are also described in PJL.

A set of job initialization commands 501, print data 502, and job ending commands 502 is called a print job 504.

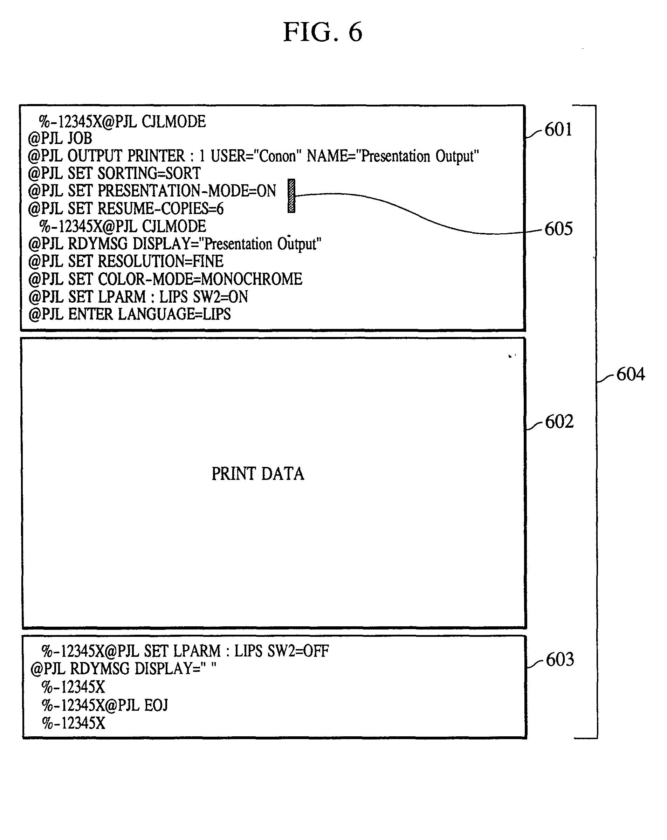

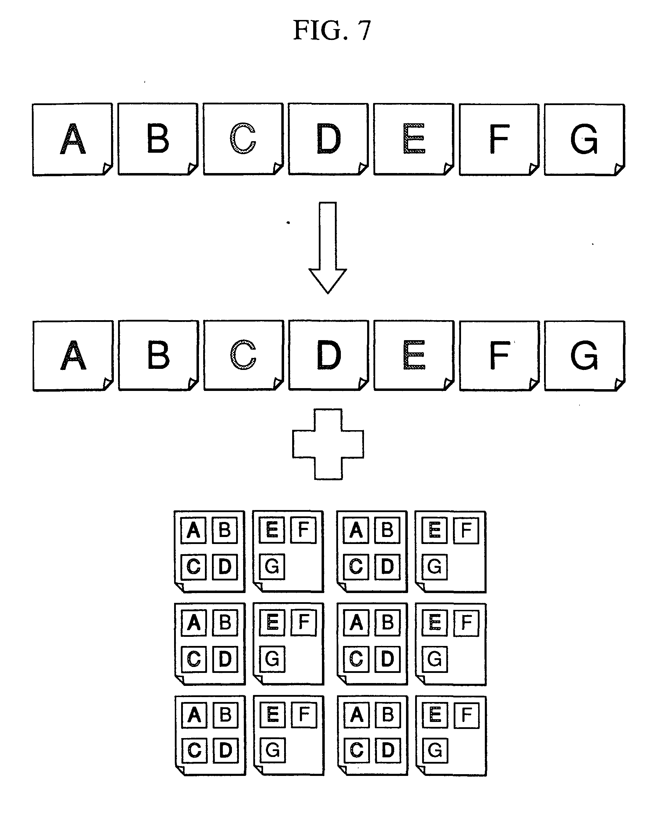

Fig. 6 illustrates an example of the content of print data to be printed in the presentation mode according to the present embodiment. In the header, control commands 605 are inserted in the job initialization commands 60, as will be described in further detail later. The inserted control commands include a command to turn on the presentation mode and a command to specify the number of copies. When presentation mode is specified in the print data, printing is performed in such a manner as described below with reference to Fig. 7.

Fig. 7 illustrates an example of a manner in which, when the presentation mode is selected, print data is supplied from a host computer and printing is performed by a printer according to the first embodiment.

In Fig. 7, reference numeral 701 denotes the content of print data transmitted from a client personal computer to a printer.

Reference numeral 702 denotes printed presentation sheets output from the printer. In this specific example, they are OHP transparency sheets for use in presentation. The printing on transparency sheets for presentation is performed in the same layout as that of the original print data.

Reference numeral 703 denotes printed distribution document sheets output from the printer. In this specific example, "4 pages/sheet" is specified as the page layout in sub window for the detailed setting of the presentation mode (Fig. 12), and the number of sets of documents is set to six.

As described above, printing on sheets for presentation and sheets for distributions in different page-layouts can be performed by a single print job.

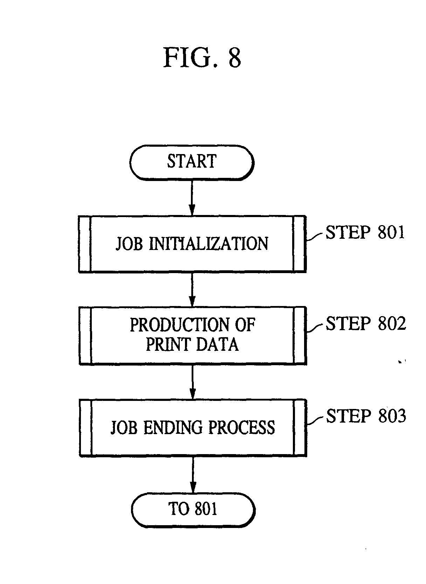

The present embodiment is described in further detail below with reference to flow charts shown in Figs. 8, 9, 10, and 11.

The printing operation according to the present embodiment is started if, after the printer driver program has been loaded into the RAM 2 as shown in Fig. 3 by the keyboard controller KBC 5 under the control of the OS 305 in response to a command issued by a user, a printer to be used is specified and a print execution command is issued by the application 201.

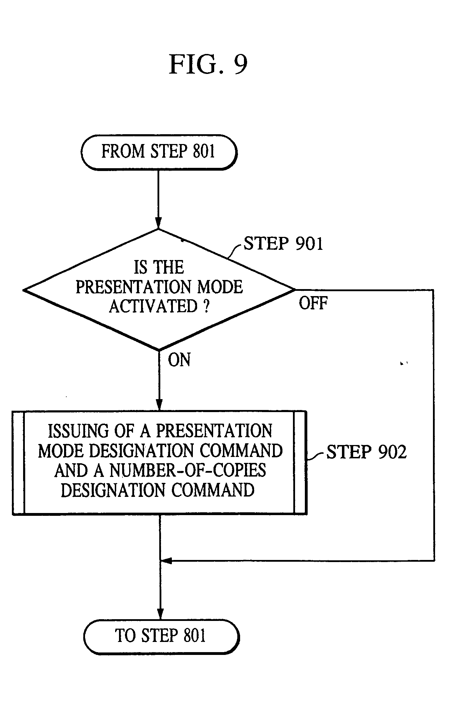

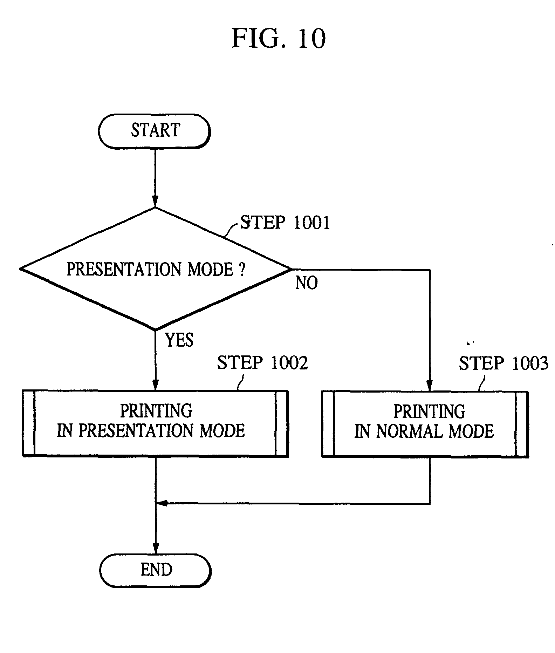

If the printing operation is specified to be performed in a plurality of different formats (for example, in the 1 page/sheet format for OHP transparency sheets and in the 4 pages/sheet format for distribution copies) as is the case where the "presentation mode" is selected, the printing operation is performed in accordance with the present embodiment of the invention. In brief, as shown in the flow charts shown in Figs. 8 and 10, the operation in the present embodiment is performed such that print data is first produced by a host computer and transmitted to a printer, and then printing is performed in a specified format. The setting of the printing conditions may or may not be performed. When the printing conditions are not specified, printing is performed in accordance with the default setting. First, generation of print data performed by the host computer is described with reference to Figs. 8 and 9.

Fig. 8 is a flow chart illustrating a printing process performed by the CPU 1 in accordance with the printer driver program on the host computer, according to the present embodiment of the invention.

In step 801 after generation of print data is started in response to a print execution command issued by the application 201, the CPU 1 performs a job initialization in response to a command issued by the printer driver. More specifically, the CPU 1 acquires a document name specified by the application, a user name, a printer name to which the print data is to be output, and DEVMODO in which the setting of the printer driver is described, from the OS. The CPU 1 then generates job initialization commands in the PJL format.

Thereafter, in step 802, processing upon print data to be printed is performed. More specifically, the graphic engine 202 of the OS converts GDI functions output by the application into DDI functions supported by the printer driver. The printer driver 203 then generates print data described in the printer language in accordance with the DDI functions.

In step 803 after the print data has been produced, the CPU 1 performs a job ending process in response to a command issued by the printer driver.

A print job 504 such as that shown in Fig. 5 is produced via the process described above briefly.

Step 801 is described in further detail with reference to Fig. 9. In the printing operation performed by the host computer according to the present embodiment, a process which is performed when the presentation mode is selected is illustrated in the form of a flow chart in Fig. 9.

If the process goes to step 901 from step 801 in the job initialization, the CPU 1 determines whether or not the presentation mode is turned on. The presentation mode can be turned on by a user via the printer driver setting window as shown in Fig. 4. The content set via the setting window is stored in DEVMODE. In the present embodiment, the presentation mode can be set by turning on the "presentation mode" button which is one of printing setting buttons used to specify the "single-side" printing mode, "both-sides" printing mode, the "binding" printing mode, or the "presentation mode". In the presentation mode, the number of sets of distribution documents to be printed in the N-up format can also be specified. In the case where the presentation mode is not selected, the process immediately returns to step 801 without doing anything. On the other hand, if the CPU 1 determines in step 901 that the presentation mode is selected, the CPU 1 issues a presentation mode designation command and a number-of-copies designation command as additional commands 605 and inserts them into the initialization commands 601 as shown in Fig. 6 (step 902). In the example shown in Fig. 6, "@PJL SET PRESENTATION-MODE=ON" is the presentation mode designation command, and "@PJL SET RESUME-COPIES=6" is the number-of-copies designation command, which indicates that the number of copies is six in this specific example. After issuing these two commands, the process returns to step 801.

The print data produced by the host computer via the process described above is sent to the printer via data transfer means 21 shown in Fig. 1. Of course, the host computer and the printer may be formed in a single unit. In this case, the data transfer means may be an internal bus. In the case where the printer and the host computer are disposed separately, the data transfer means 21 may be an external interface such as a Centronics interface, USB, IEEE-1394, or a network. When the printing process is entirely completed, the printing program according to the present embodiment is completed and deleted from the RAM 2 by the OS 405.

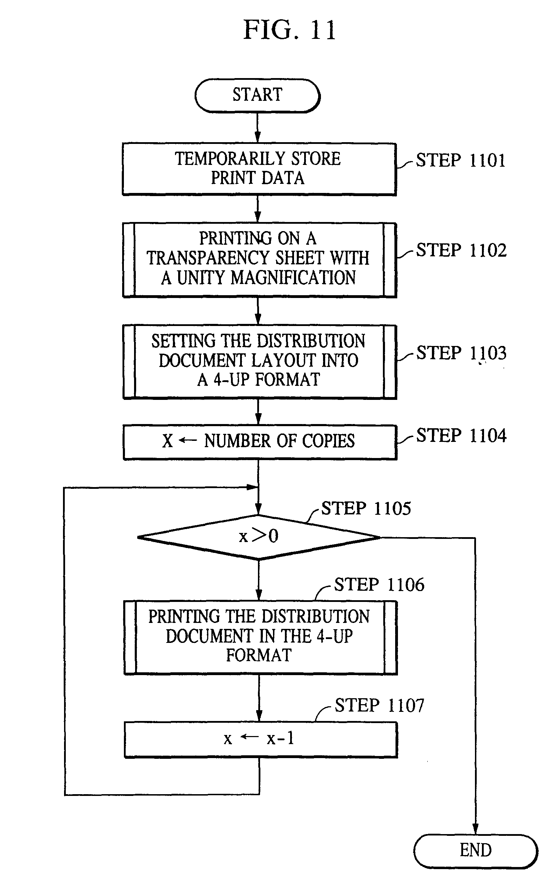

The printing process performed by the printer is described below with reference to the flow charts shown in Figs. 10 and 11. In the present embodiment, by way of example, 7-page print data produced by the host computer such as that denoted by reference numeral 701 in Fig. 7 is printed in the presentation mode.

In the printing operation performed by the printer, steps for determining whether printing is to be performed in the presentation mode or the normal mode, and steps for printing in the presentation mode or the normal mode are shown in the form of a flow chart in Fig. 10.

In step 1001, the CPU 12 of the printer 1500 analyzes the print data received from the host computer 3000 to determine whether the presentation mode is specified in the initialization commands. In the case where the presentation mode is not specified, the process goes to step 1003 to perform printing in the normal mode in which all pages of the print job are printed in the same layout. After step 1003, the printing operation is completed. In the case of the print data shown in Fig. 7, the 7-page print data received from the host computer is simply printed on 7 pages On the other hand, when it is determined in step 1001 that the presentation mode is specified, the process goes to step 1002 and the CPU 12 performs printing such that print data is printed in different layouts for presentation sheets and distribution sheets.

Fig. 11 is a flow chart illustrating the details of step 1002 shown in Fig. 10.

In step 1101, the CPU 12 extracts the body of the print data 602 shown in Fig. 6 from the print data received from the host computer and temporarily stores the print data 602 in the RAM 19 or the hard disk 20 provided in the printer as shown in Fig. 1. In the above process, the print data described in the printer language is analyzed and a display list in an intermediate data format, which can be easily converted into a bit map form, is produced. The obtained data is sorted in terms of bands in the order in which the bands are to be printed. In the present embodiment, although an electrophotographic printer is employed as the printer 1500 serving as the print control apparatus, no page memory is installed on the printer 1500 to reduce its cost, and thus band printing is necessary. In this case, it is impossible to stop outputting video data in the middle of a page, and it is needed to convert each band data into an raster image within a particular length of time in which a sheet is forwarded. The time needed for conversion into the raster image can be reduced by sorting print data in the printing order and producing a display list thereof.

Thereafter, in step 1102, the CPU 12 performs printing in an original layout format using the print data temporarily stored in step 1101, in accordance with the procedure described in the print control program stored in the ROM 13. In the present embodiment, OHP transparency sheets are manually fed from a specified tray. Herein, a message "Please place a transparency sheet on the tray" may be displayed on the operation control panel 1501 to prompt a user to place a transparency sheet. When the print data described in the printer language is analyzed in the previous step, the tray from which sheets are to be fed is determined, and the print data is output such that printing in the 1-up format is performed on each sheet (1-page/sheet format) provided from the specified tray. After completion of printing on the respective pages, the display list is deleted because the storage capacity of the RAM 19 is limited. However, the print data itself is retained without being deleted. This is because print data described in a printer language generally has a small size such as several ten to several hundred Kbytes and thus it occupies a small part of the memory area of the printer memory. However, data in an intermediate format has a large size such as several hundred Kbytes to several Mbytes, because data in the intermediate format is similar to an raster image and font data is not rasterized. After completion of printing on presentation sheets, the process goes to step 1103 without ending the printing operation.

In step 1103, the CPU 12 determines the page layout (4 pages/sheet in this specific example) specified in the print data of the print job and produces a print image in the 4-up format for use in printing on distribution sheets, from the temporarily stored print data. Although the print data is produced into the specified 4-pages/sheet format (4-up format) in this example, the print data may be produced in any other specified format. In the case of the 4-pages/sheet format, intermediate data of 4 pages is produced and printed. This can sometimes cause the intermediate data to have a greater size than can be stored in the memory. In this case, degrading is performed so that the intermediate data has a reduced resolution.

After producing a raster image for use in printing distribution sheets in the N-page layout, the process goes to step 1104. In step 1104, the CPU 12 substitutes the number of sets of distribution copies designated by "@PJL SET RESUME-COPIES=6" into a variable X used in the print processing program to indicate the number of sets of distribution copies.

Thereafter, in steps 1105 to 1107, the specified number of sets of documents for distribution are produced by performing printing using the N-up data produced in step 1103. After completion of printing on presentation sheets and distribution sheets, the print data stored in the storing means (RAM 19) is deleted, and the printing operation is ended. An example of a manner in which printing is performed in the presentation mode according to the present embodiment is shown in Fig. 7. First, 7-page print data 701 received from the host computer is printed on OHP transparency sheets in the original-layout format (in which one logical page is printed on one printing medium) as denoted by reference numeral 702 in Fig. 7. Thereafter, printing is performed to produce six sets of documents for distribution such that one set of documents is printed on two sheets in the 4-up format (in which 4 logical pages are printed on one printing medium).

In printing of a print job, as described above, in the case where the presentation mode is specified by a client, the printer does not delete the print data when the printing on presentation sheets is completed, and the printer further performs printing on distribution sheets after changing the sheet tray/cassette to a specified one and/or changing the page layout to a specified page layout. If a specified number of sets of distribution copies have been produced, the printing operation is ended. Thus, a user can obtain a . plurality of sets of copies, copies on a plurality of different printing media, and copies in a plurality of different layouts simply by issuing a single print job from a client.

### Second Embodiment

In the first embodiment described above, the printer 1500 including the print control apparatus produces print data for printing on presentation sheets and also print data for printing on distribution sheets from a received print job. However, in order for the printer 1500 to produce such print data, it is required that the print control program stored in the ROM 13 have the capability of producing such print data. To meet the above requirement, it is needed to develop many print control programs for various types of printers, respectively. The development of print control programs needs great efforts, a long period of time, and high cost. In this second embodiment, to avoid the above problem, the printer driver program in the host computer 3000 serving as a client information processing apparatus produces print data in a format specified by a user in the presentation mode, and the print control apparatus simply performs printing in the normal mode.

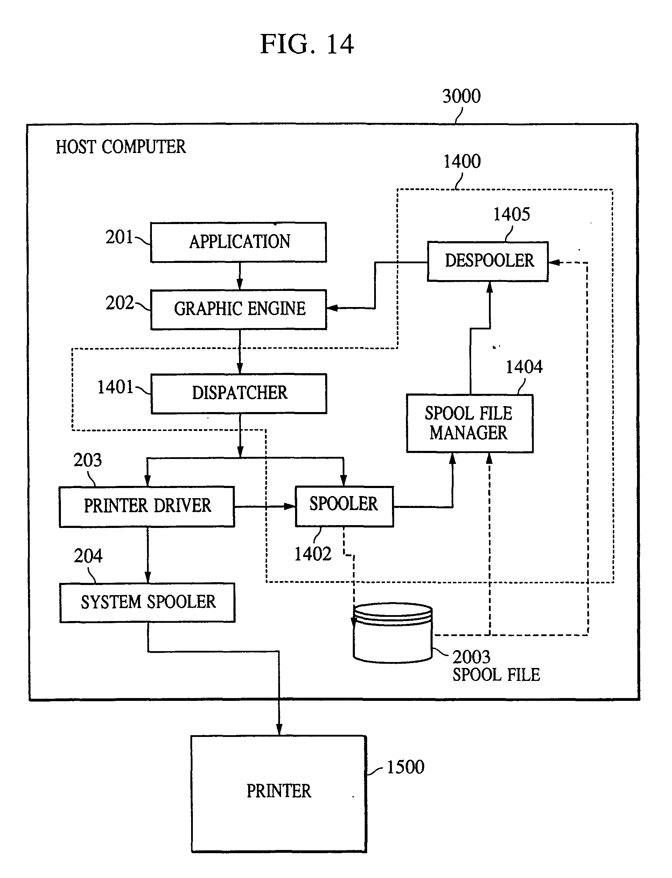

Fig. 14 illustrates a system obtained by extending the system shown in Fig. 2. In this system shown in Fig. 14, when a print command is sent from the graphic engine 202 to the printer driver 203, a spool file 1403 described in an intermediate code is produced. In the system shown in Fig. 2, the application 201 is released from the printing operation when the printer driver 203 has completed conversions of all print commands received from the graphic engine 202 into printer control commands. In the system shown in Fig. 14, in contrast, the application 201 is released from the printing operation when the spooler 1402 has completed conversions of all print commands into intermediate data and has output the resultant data to the spool file 1403. In general, the latter process needs a shorter time. Furthermore, in the system shown in Fig. 14, the content of the spool file 1403 can be processed. This makes it possible to realize a function which is not available in the application or the printer device. For example, it becomes possible to expand or reduce the print data received from the application or combine a plurality of pages into a single page.

To realize the above capabilities, the system shown in Fig. 2 is extended into the system shown in Fig. 14 such that it becomes possible to perform spooling in intermediate codes. In order to process print data, setting is performed via a window provided by the printer driver 203, and the content of the setting is stored by the printer driver 203 into the RAM 2 or the external memory 11. In the system shown in Fig. 14, extended modules are located in an area enclosed by a broken line 1400. In the present information processing apparatus, the extended modules are supplied when the printer driver program is installed.

The modules of the information processing apparatus according to the present invention is described in further detail below with reference to Fig. 14. The modules shown in Fig. 14 are placed in the RAM 2 so that the CPU 1 can perform various operations in accordance with programs of the respective modules.

In this extended processing method, as shown in Fig. 14, a dispatcher 1401 receives a DDI function representing a print command from the graphic engine 202. In the case where the DDI function representing the print command that the dispatcher 1401 has received from the graphic engine 202 serving as printing means of the OS is a print command (GDI function) issued by the application 201 to the graphic engine 202, the dispatcher 1401 loads the spooler 1402 from the external memory 11 into the RAM 2 and transfers the received print command (DDI function) not to the printer driver 203 but to the spooler 1402.

The spooler 1402 analyzes the received print data and converts it into an intermediate code which can be easily processed in units of pages. The resultant intermediate code is output to the spool file 1403. The spool file described in the intermediate code in units of pages is referred to as a page description file (PDF). The spooler 1402 acquires, from the printer driver 203, information indicating the printing conditions (N-up format, both-sides printing; stapling position, color/monochrome) under which printing is to be performed. The acquired setting information is stored in the spool file 1403 associated with the print job. The setting file associated with the job is referred to as a job setting file (or also referred to as a spool description file (SDF)). Setting of the printing conditions is performed in advance by a user upon the printer driver before the application issues a print execution command.

Furthermore, the spooler 1402 loads a spool file manager 1404 from the external memory 11 into the RAM 2 and informs the spool file manager 1404 of the state in which the spool file 1403 is produced. Thereafter, the spool file manager 1404 determines whether printing can be performed in accordance with the specified printing conditions described in the spool file 1403.

In the case where the spool file manager 1404 determines that the printing can be performed using the graphic engine 202, the despooler 1405 is loaded from the external memory 11 into the RAM 2, and a command is issued to the despooler 1405 to perform printing the page description file described in the intermediate code in the spool file 1403.

The despooler 1405 processes the page description file described in the intermediate code in the spool file 1403 in accordance with the content of the job setting file including the setting information in the spool file 1403 thereby reproducing the GDI function. The resultant GUI function is output via the graphic engine 202 serving as the printing means of the OS.

In the case where the print command (DDI function) sent to the dispatcher 1401 from the graphic engine 202 serving as the printing means of the OS is a print command (GDI function) issued from the despooler 1405 to the graphic engine 202, the dispatcher 1401 sends the print command not to the spooler 1402 but to the printer driver 203.

The printer driver 203 produces a printer control command described in a page description language or the like in accordance with the DDI function received from the graphic engine 202 serving as the printing means of the OS. The resultant printer control command is output to the printer 1500 via the system spooler 204.

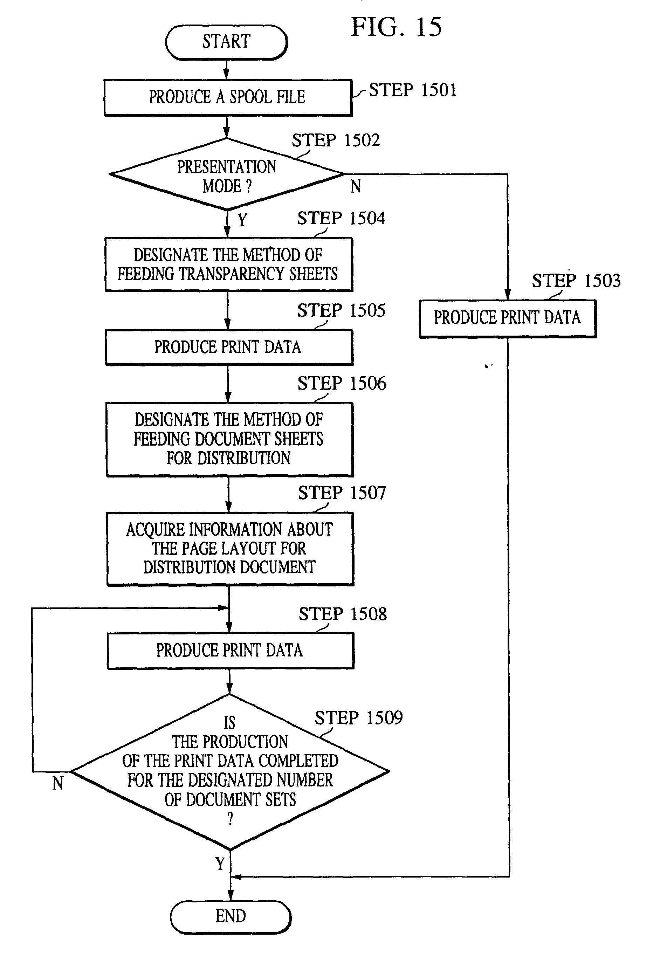

The process of producing a print job in the presentation mode in this system is described below with reference to Fig. 15.

Fig. 15 shows the operations of the respective extended modules 1400 executed by the CPU 1. The process is started when a DDI function or image representing data is output by the graphic engine in response to a print request issued by the application 201.

In step 1501, the dispatcher 1401 receives image representing data (DDI function) from the graphic engine 202. If it is determined that the received print data has been originally issued by the application, the image representing data is transferred to the spooler 1402. The spooler 1402 analyzes the image representing data and produces a PDF file as intermediate data. The resultant intermediate data is stored in the spool file in a particular memory area allocated in the RAM 2 (or in the external memory 11). Furthermore, the spooler 1402 acquires DEMODE in which the content of the setting associated with the printer driver is described and stores it as a setting file in the spool file 1403.

Subsequently, in step 1502, the spool file manager 1404 is started and the setting file is read to determine whether the presentation mode is specified as the printing mode. In the case where the presentation mode is not specified, the process goes to step 1503. However, if the presentation mode is specified, the process goes to step 1504.

In step 1503, the spool file manage 1404 reads the PDF data serving as the intermediate data from the spool file and transfers it to the despooler 1405 together with data indicating the layout mode of the print job described in the setting file. The despooler 1405 expands or reduces the PDF data in accordance with the layout mode so as to reproduce the image representing data (GDI function). The resultant print data is output to the graphic engine 202 serving as the printing means of the OS. Thereafter, the process is performed in a similar manner as in the conventional process.

On the other hand, in step 1504, the spool file manage 1404 analyzes DEVMODE or the content of the setting file to determine the manner in which printing on presentation sheets is to be performed. In the case where the printing is specified to be performed on the same type of sheets for all sets of documents in the window for the detailed setting of the presentation mode, sheets are fed in the same manner in printing for presentation and printing for distribution. That is, one sheet tray/cassette is specified for the given print job. On the other hand, if the printing is specified to be performed on different types of sheets, a particular sheet feeding manner (manual sheet feeding (from a tray) in the example shown in Fig. 12) is specified.

Thereafter in step 1505, the spool file manage 1404 reads the PDF data serving as the intermediate data from the spool file and transfers it to the despooler 1405 together with data indicating the layout (1-page/sheet format in default) for printing on distribution sheets. The despooler 1405 processes the PDF data in accordance with the specified layout mode so as to reproduce the image representing data (GDI function). The resultant print data is output to the graphic engine 202 serving as the printing means of the OS. After outputting the image representing data, the setting file and the intermediate data file (PDF) are further retained in the spool file 1403.

In step 1506, the spool file manage 1404 analyzes DEVMODE or the content of the setting file to determine the manner in which printing on distribution sheets is to be performed. Herein, the feeding manner specified via the window for the detailed setting of the presentation mode shown in Fig. 12 is employed (that is, "cassette-1" is specified in the example shown in Fig. 12).

Then in step 1507, the spool file manage 1404 analyzes DEVMODE or the content of the setting file to determine the layout mode specified for the printing on distribution sheets and further determine whether a memo space is to be inserted. A message indicating the result is sent to the despooler 1405.

Thereafter, in step 1508, the despooler 1405 expands or reduces the intermediate data in accordance with the data which has been acquired in step 1507 and which indicates the layout for the printing on distribution sheets and indicates whether a memo space is to be inserted, so as to reproduce image representing data (GDI function) taking into account a location where a memo space is created. The resultant print data is output to the graphic engine 202 serving as the printing means of the OS. In the case where no memo space is inserted, the intermediate data is arranged according to the specified layout such that a plurality of logical pages are placed on one physical page. When a memo space is inserted, one-half the number of logical pages specified in the layout setting for distribution copies are placed in one physical page, and memo spaces are placed in the remaining logical pages in the same physical page as shown in Fig. 13. A memo space may be created simply by inserting a blank logical page or by printing ruled lines in accordance with ruled-line data which is produced by the despooler 1405 and applied to the graphic engine 202.

In step 1509, the spool file manager 1404 detects the number of sets of distribution copies specified via the window shown in Fig. 4, from DEVMODE or the setting file, and the spool file manage 1404 determines whether the image representing data has been output from the despooler 1405 as many times as the specified number of sets of distribution copies. If the number of times the printing data has been output is smaller than the specified number, the process returns to step 1508. On the other hand, if the number of times has reached the specified number, the reproducing of the image representing data is ended.

The image representing data (GDI function) reproduced in the above-described manner is sent to the dispatcher 1401 via the graphic engine 202. In the case where the dispatcher 1401 determines that the data has been sent from the despooler 1405, the dispatcher 1401 transfers the image representing data to the printer driver 203. The printer driver converts the received data into print data described in the printer language and outputs the resultant print data to the printer 1500 via the system spooler 204.

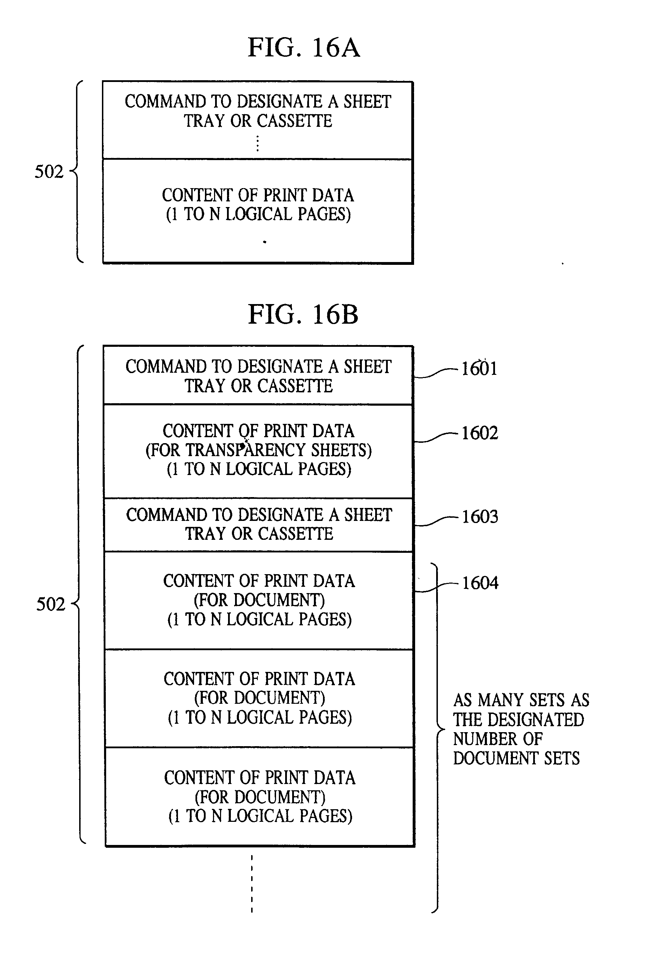

The print data produced by the printer driver 203 is described in further detail below with reference to Fig. 16. Fig. 16 illustrates print data 502 described in the printer language in the print job (504 in Fig. 5). Fig. 16A shows print data which is produced when a printing mode other than the presentation mode is selected. Examples of such printing modes include a single-side printing mode, a both-side printing mode, and a binding printing mode. In the case where a printing mode other than the presentation mode is selected, the content of print data is not changed during the printing operation for the respective sets of copies, and thus the print data always includes first to Nth logical pages as shown in Fig. 16A. The specified sheet tray/cassette and the specified number of sets of copies are description in the header.

In contrast, in the presentation mode, the sheet tray/cassette may be changed for a particular set of copies and/or the number of copies included in one set may be changed during the printing operation. Printing in such a manner cannot be performed by the printer 1500, if the print data is described in the conventional manner. One way to avoid the above problem is to add a control code. However, modification of the print control program of the printer 1500 results in additional cost, and therefore, it is not desirable to increase the control codes. Thus, in the present invention, print data is produced as shown in Fig. 16B. In Fig. 16B, reference numeral 1601 denotes a command specifying a sheet tray/cassette to be used. This command is inserted by the printer driver in accordance with the sheet feeding method for presentation copies specified in step 1504 in Fig. 15. Reference numeral 1602 denotes the content of print data for presentation copies. This data includes first to Nth logical pages described in the printer language in accordance with the image representing data produced in step 1505 in Fig. 15.

Reference numeral 1603 denotes a command specifying a tray/cassette to be used. This command is inserted by the printer driver in accordance with the sheet feeding method for distribution copies specified in step 1506 in Fig. 15. In recent sophisticated printer languages such as LIPSIV (registered trademark), it is allowed to specify a sheet tray/cassette for each page in one job, and therefore, the representation in the manner described in Fig. 16B is allowed.

Reference numeral 1604 denotes the content of print data for distribution copies. This data includes first to Nth logical pages described in the printer language in accordance with the image representing data produced in step 1508 in Fig. 15. The layout for the distribution copies is that determined in step 1507, wherein the number of logical pages specified in Fig. 12 are placed on one physical page. For example, when the "4-pages/sheet" format is specified for distribution copies and no memo spaces are inserted, a print job including a total of 10 logical pages is converted into print data for distribution copies in which 4, 4, and 2 logical pages are placed in the respective 3 physical pages. In the case where memo spaces are inserted, a print job including a total of 10 logical pages is converted into print data for distribution copies in which 2, 2, 2, 2, and 2 logical pages are placed in the respective 5 physical pages (2, 2, 2, 2, and 2 memo pages are also placed in the respective 5 physical pages). Because the content of this print data represents an image to be printed in the specified layout, the print data can be directly printed by the printer 1500 in the same manner as in the normal printing operation even when the printer 1500 does not have the capability of combining a plurality of logical pages into a single physical page.

Even recent advanced printer languages such as LIPSIV do not have a command to change the number of sets of copies during the same job. Therefore, it is impossible to specify the numbers of sets of copies such that, for example, one set of presentation copies and four sets of distribution copies are to be printed, unless the language is extended. In the present embodiment, in order to avoid the above problem, the data for distribution copies is transmitted continuously as many times as the number of sets (X) of distribution copies. This allows the printer 1500 to perform the printing operation in the same manner as is employed for a single long job. Therefore, no extension is needed in the capability of the printer 1500.

As described above, in the case where the presentation mode is specified by a client, the printer driver spools the image representing data received from the application, and then produces data for presentation copies and data for distribution copies from the spooled image representing data, and finally outputs to the printer the resultant data in the form of a single piece of print data. Therefore, a user can obtain a plurality of sets of copies, copies on a plurality of different printing media, and copies in a plurality of different layouts simply by issuing a single print job from a client.

### Third Embodiment

In the first and second embodiments described above, printing is performed in different formats by a single print job. In contrast, in this third embodiment, two print jobs, that is, a print job to obtain OHP transparency copies and a print a job to obtain printed copies for distribution, are produced in response to a single print execution command issued by the application 201.

A print control system employed herein in the third embodiment has a similar configuration to that employed in the first or second embodiment. Also in this embodiment, as in the first and second embodiment, it is possible to obtain printed copies in a plurality of different specified output forms (in particular, in different printing formats) simply by issuing a single print execution command. To achieve the above capability, a print mode called the presentation mode is also provided in the present embodiment. If the presentation mode is selected, the printing operation is specified such that printing on OHP transparency sheets and printing on sheets in an N-up layout for distribution are performed in a single printing operation (that is, printed copies in different formats can be obtained in a single printing operation). The printing operation in the presentation mode according to the third embodiment of the present invention is described in further detail below. Note that the above combination of printing formats in the presentation mode is one of examples allowed in the present embodiment. What is essential herein is to produce print jobs in a plurality of output forms from a single piece of data to be printed, and various different forms may be combined. For example, it may be possible to specify a combination of five sets of copies in the "single-side" printing mode and one set of copies in the "both-sides" printing mode. Another example is a combination of four sets of copies on A4 size sheets and two sets of copies on B5 size sheets.

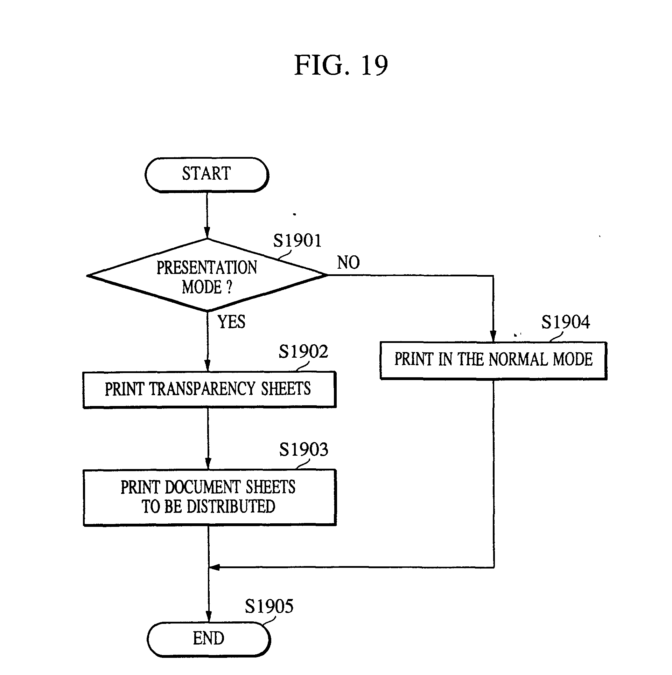

Fig. 19 is a flow chart illustrating a process performed by the spool file manager 1404 according to the present embodiment. In the process shown in Fig. 19, print data (print job) is produced from an intermediate code described in the spool file 1403. The present embodiment is described in detail below with reference to the flow chart shown in Fig. 19.

The process of the present embodiment is started when the application 201 being executed issues a print execution command together with a command specifying a printer to be used in response to a command input by a user via the keyboard 9 or the like shown in Fig. 1. In the case where the printing process is specified to be performed in a particular mode (presentation mode) in which printing is performed in a plurality of different forms, the process is performed in a manner specific to the present embodiment. Note that the setting via the user interface window shown in Fig. 4 is not necessary to be performed each time printing is performed. When the setting is not performed, printing is performed in accordance with the default setting or the current setting given in the previous setting operation.

In the printing operation according to the present embodiment, as shown in Fig. 14, print data is temporarily stored in the spool file 1403. Thereafter, the spool file manager 1404 performs printing using the print data stored in the spool file 1403 in accordance with the setting associated with print data. Fig. 19 is a flow chart illustrating the process performed by the spool file manager 1404.

First, the setting data stored in the spool file 1403 is analyzed to determine whether or the presentation mode is selected (step 1901). The setting of the presentation mode is performed by a user via the printer driver setting window shown in Fig. 4. In the present embodiment, the presentation mode is selected from printing methods including the single-side printing mode, the both-sides printing mode, the binding printing mode, and the presentation mode. In the case where the presentation mode is selected, the number of sets of copies in the N-up format for distribution is further specified.

In the case where it is determined in step 1901 that the presentation mode is not selected, the spool file manager 1404 commands the despooler 1405 to process the intermediate code described in the spool file 1403 in a specified manner, and performs printing in the normal mode. On the other hand, in the case where it is determined in step 1901 that the presentation mode is selected, the spool file manager 1404 issues a command to perform printing in the OHP transparency format (in the original-layout format) in accordance with the intermediate code described in the spool file 1403 (step 1902). Thereafter, the spool file manager 1404 issues a command to perform printing in a specified format (in the 4-up layout format) to obtain a specified number of sets of copies for distribution, in accordance with the intermediate code described in the spool file 2003 (step 1903).

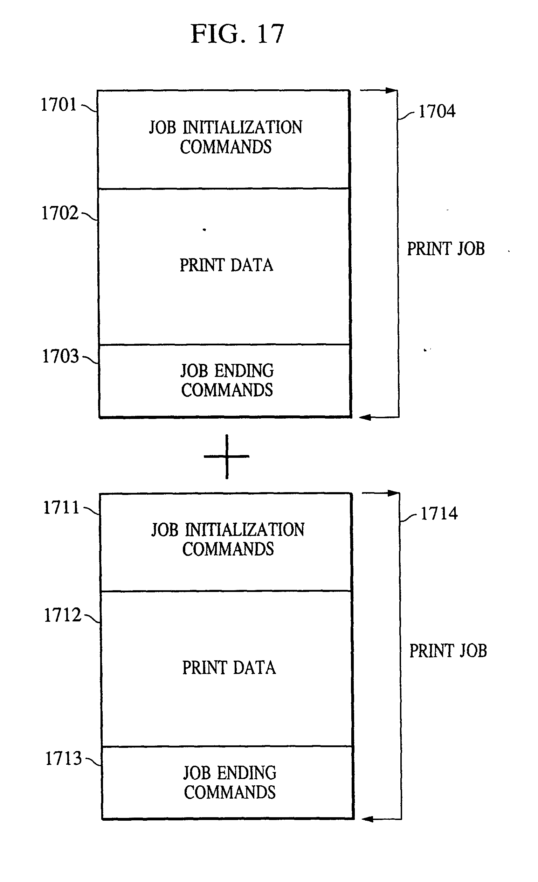

In the first embodiment described above with reference to Fig. 5, one print job is produced. In the present embodiment, unlike the first embodiment, a plurality of print jobs are produced for a single piece of data to be printed, as shown in Fig. 17.

However, as shown in Fig. 19, in the case where the presentation mode is not selected, one print job is generally produced. In this case, in response to a command issued by the spool file manager 1404, the printer driver 203 produces a print job by inserting print data described in the page description language (PDL) between job initialization commands and job ending commands.

On the other hand, in the case where the presentation mode is specified, a print job 1704 for OHP transparency copies and a print job 1714 for distribution copies are produced as shown in Fig. 17. Each print job has a data structure similar to that of a usual print job. In the present embodiment, when the presentation mode is selected, a print job for OHP transparency copies is produced as the print job 1074 and a print job 1703 for distribution copies is produced as the print job 1174.

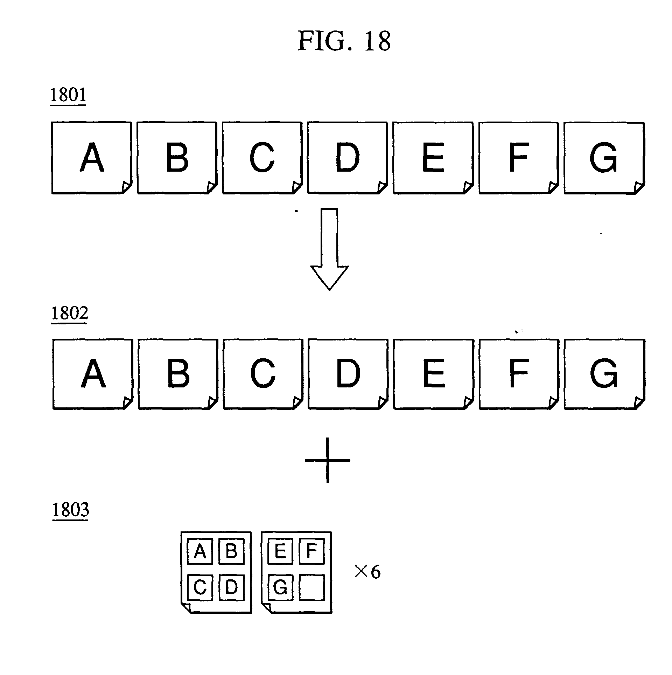

Fig. 18 is a diagram illustrating print jobs which are produced in a printing operation to obtain six sets of copies for distribution when the presentation mode has been set via the window shown in Fig. 4. In the above printing operation, if print data 1801 representing the contents of, for example, seven pages is output from the application, a print job 1802 for OHP transparency copies is produced as the print job 1704. On the basis of this print job 1802 for OHP transparency copies, printing is performed on seven printed OHP transparency sheets in the original-layout format. Thereafter, a print job 1803 for distribution copies is produced as the print job 1714. Herein, in this specific example, the print job 1803 is produced so as to obtain six sets of distribution documents in which the same contents as those of four OHP transparency sheets are printed on each distribution document sheet.

In the present embodiment, as described above, in response to a single print execution command issued by the application 201, the OHP transparency print job 1802 and the distribution document print job 1803 are produced to obtain the copies for the respective purposes. That is, in response to a single print execution command issued by a user, a print job for presentation (OHP transparency copies) and a print job for distribution documents are automatically produced without needing an additional operation of the user. Thus, the present embodiment provides great convenience to the user.

Although in the embodiment described above, a combination of predetermined output formats (the OHP transparency output format and the distribution document output format in the presentation mode) can be specified, the present invention is not limited to such a combination. Any arbitrary output formats specified via the window shown in Fig. 4 may also be combined. For example, a combination of printing of six sets of copies in the singe-side printing mode and printing of three sets of copies in the both-sides printing mode may be possible.

The present invention described above with reference to the first, second, and third embodiments may be applied to a single apparatus (such as a printer, copying machine, an information processing apparatus, or a host computer) as is the case in the first, second, and third embodiments or may be applied to a system including a plurality of apparatuses (such as a host computer and a printer. When the present invention is applied to a system, all processes described in the first, second, and third embodiments may be incorporated.

Furthermore, the objects of the present invention may also be achieved by supplying a storage medium, on which a software program implementing the functions of any of the embodiments described above is stored, to a computer (or a CPU or an MPU) in a system or an apparatus whereby the computer (or the CPU or the MPU) in the system or the apparatus reads and executes the program code stored on the storage medium.

In this case, it should be understood that the program code read from the storage medium implements the functions of invention and thus the storage medium including the program code stored thereon falls within the scope of present invention.

Storage media which can be preferably employed in the present invention to supply the program code include a floppy disk, a hard disk, an optical disk, a magneto-optical disk, a CD-ROM, a CD-R, a magnetic tape, a nonvolatile memory card, a ROM, and a DVD.

Furthermore, the scope of the present invention includes not only such a system in which the functions of any embodiment described above is implemented simply by reading and executing a program code on a computer but also a system in which a part of or the whole of process instructed by the program code is performed using an OS (operating system) on the computer.

Furthermore, the scope of the present invention also includes a system in which a program code is transferred once from a storage medium into a memory provided in a function extension board inserted in a computer or provided in a function extension unit connected to the computer, and then a part of or the whole of process instructed by the program code is performed by a CPU or the like in the function extension board or the function extension unit thereby implementing the functions of any embodiment described above.

A program code which is installed on a computer to implement any function of the present invention on the computer also falls within the scope of the present invention. That is, a computer program for implementing a function of the present invention also falls within the scope of the present invention defined in the appended claims.

Furthermore, a method of supplying a computer program is not limited to installing the computer program on a computer from a floppy disk or a CD-ROM on which the computer program is stored. For example, a computer program may also be supplied by accessing an Internet home page using a browser running on a client computer and downloading the computer program itself or a file including the compressed computer program and having the capability of automatically decompressing and installing the computer program. A program code forming a computer program according to the present invention may be divided into a plurality of files, and the respective files may be downloaded from different home pages. That is, a WWW server for providing, by means of downloading, a program file for implementing a function of the present invention on a computer to a plurality of users also falls within the scope of the present invention.

A function of the present invention may also be implemented on a computer by distributing, among users, storage media such as floppy disks on which an encrypted computer program according to the present invention is stored so that a user who satisfies a predetermined condition may download a key information used for decryption from a home page via the Internet and may install the computer program on his/her computer using the key information.

As can be seen from the above description, the present invention provides great advantages. That is, the present invention allows a user to obtain printed copies in a plurality of different formats only by performing a single printing operation without needing an additional operation. This results in a reduction in the load imposed upon the user. Furthermore, it becomes possible to prevent an interrupt which may otherwise occur between a plurality of printing operations for obtaining printed copies in different formats.

In the case where the present invention is embodied on a printing apparatus, printed copies in a plurality of different formats can be obtained by a single print job including a predetermined command inserted therein. This allows a reduction in traffic between a host computer and a printer via a data transmission line.

In the case where the present invention is embodied on an information processing apparatus, it is possible to obtain printed copies in a plurality of different formats using a conventional printing apparatus without having to perform a special extension upon the printing apparatus. This allows the invention to be implemented on an apparatus in a reduced period of time at reduced cost.

As described above, the present invention makes it possible to produce print jobs corresponding to a plurality of different output forms from a single piece of data to be printed thereby obtaining printed copies in the plurality of different output forms, simply by issuing a single print execution command.

While the present invention has been described with reference to what are presently considered to be the preferred embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

A technique is disclosed for obtaining printed copies in a plurality of different formats such as OHP transparency copies for use by a presenter in a presentation and copies to be distributed among participants in the presentation, simply by a single print job. Input data to be printed is temporarily stored in a memory. First print data to be printed in a first printing format and second print data to be printed in a second printing format are produced from the data stored in the memory. A single set of print data is then produced from the first print data and the second print data.

## Claims

1. A print control apparatus for performing a printing operation in accordance with print data received from an information processing apparatus, comprising:
storing means for storing print data included in a print job;
printing-in-original-layout means for performing a printing process such that one logical page is printed on one printing medium in accordance with said print data;
printing-in-modified-layout means for performing a printing process such that a plurality of logical pages are printed on one printing medium in accordance with said print data; and
deleting control means which retains the print data in said storing means after one of the printing processes is completed and which deletes the print data from said storing means when both printing processes are completed.

2. A print control apparatus according to Claim 1, wherein
said printing-in-modified-layout means performs printing in a modified layout in which a plurality of logical pages are printed on one printing medium so as to produce as many sets of copies as specified in the print data; and
said deleting control means deletes the print data from said storing means when the printing in the modified layout for producing the specified number of sets of copies is completed.

3. A print control apparatus according to Claim 1, further comprising:
inputting means for inputting a command to specify that printing should be performed in a presentation mode; and
control means for controlling the respective printing means such that when the command specifying the presentation mode is input via said inputting means, both said printing in the original layout and said printing in a modified layout are executed for a single print job, while when the command specifying the presentation mode is not input via said inputting means, printing is executed in a specified layout for a single print job.

4. A method for controlling a print control apparatus for performing a printing operation in accordance with print data received from an information processing apparatus, said method comprising:
a storing step for storing print data included in a print job;
a printing-in-original-layout step for performing a printing process such that one logical page is printed on one printing medium in accordance with said print data;
a printing-in-modified-layout step for performing a printing process such that a plurality of logical pages are printed on one printing medium in accordance with said print data; and
a deleting control step in which the print data stored in said storing step is retained after one of the printing processes is completed and the print data is deleted when both printing processes are completed.

5. A method according to Claim 4, wherein
said printing-in-modified-layout step performs printing in a modified layout such that a plurality of logical pages are printed on one printing medium so as to produce as many sets of copies as specified in the print data; and
said deleting control step deletes the print data stored in said storing step when the printing in the modified layout for producing the specified number of sets of copies is completed.

6. A method according to Claim 4, further comprising:
a inputting step for inputting a command to specify that printing should be performed in a presentation mode; and
a control step for controlling the respective printing step such that when the command specifying the presentation mode is input in said inputting step, both said printing in the original layout and said printing in a modified layout are executed for a single print job, while when the command specifying the presentation mode is not input in said inputting step, printing is executed in a specified layout for a single print job.

7. An information processing apparatus for producing print data to be printed by a printing apparatus, comprising:
spooling means for temporarily storing input data to be printed;
determining means for determining a printing mode which has been set;
image representing data producing means for, in the case where said determining means determines that a predetermined printing mode has been set, producing first image representing data to be subjected to first formatting and second image representing data to be subjected to second formatting, on the basis of the data stored in said spooling means; and
print data producing means for producing one set of print data from the first image representing data and the second image representing data produced by said image representing data producing means.

8. An information processing apparatus according to Claim 7, wherein said first formatting is a process of placing one logical page of said data to be printed on one logical page of image representing data and said second formatting is a process of placing a plurality of logical pages of said data to be printed on one logical page of image representing data.

9. An information processing apparatus according to Claim 8, wherein
said image representing data is a GDI function;
said image representing data producing means outputs the generated image representing data to image representing means of an operating system; and
said print data producing means produces print data depending upon a printer language in accordance with the GDI function received from the image representing means of the operating system.

10. An information processing apparatus according to Claim 7, further comprising: deleting control means which retains the data to be printed in said spooling means after one of the formatting processes is completed and which deletes the data to be printed from said spooling means when both formatting processes are completed.

11. An information processing apparatus according to Claim 7, further comprising: printing manner setting means capable of performing setting associated with the first formatting and the second formatting at the same time via a user interface window.

12. An information processing apparatus according to Claim 11, wherein said printing manner setting means is capable of setting a page layout in the formatting.

13. An information processing apparatus according to Claim 11, wherein
said predetermined printing mode is a presentation mode; and
said image representing data producing means produces presentation copy data to be subjected to first formatting and also produces distribution document data to be subjected to second formatting.

14. An information processing apparatus according to Claim 13, wherein
said printing manner setting means is capable of setting the number of sets of distribution copy data; and
said image representing data producing means produces as many sets of distribution copy data to be subjected to the second formatting as the number of sets specified by said printing manner setting means.

15. An information processing apparatus according to Claim 13, wherein said printing manner setting means is capable of further specifying whether a memo space is to be inserted into the distribution copy data, and wherein in the case where a memo space is specified to be inserted, said printing manner setting means produces image representing data including a logical page representing a memo space when producing the distribution copy data.

16. A method of controlling an information processing apparatus for producing print data to be printed by a printing apparatus, said method comprising:
a spooling step for temporarily storing input data to be printed;
a determining step for determining a printing mode which has been set;
a image representing data producing step for, in the case where it is determined in said determining step that a predetermined printing mode has been set, producing first image representing data to be subjected to first formatting and second image representing data to be subjected to second formatting, on the basis of the data stored in said spooling step; and
a print data producing step for producing one set of print data from the first image representing data and the second image representing data produced in said image representing data producing step.

17. A method according to Claim 16, wherein
said first formatting is a process of placing one logical page of said data to be printed on one logical page of image representing data and said second formatting is a process of placing a plurality of logical pages of said data to be printed on one logical page of image representing data.

18. A method according to Claim 17, wherein
said image representing data is a GDI function;
said image representing data producing step outputs the generated image representing data to image representing means of an operating system; and
said print data producing step produces print data depending upon a printer language in accordance with the GDI function received from the image representing means of the operating system.

19. A method according to Claim 7, further comprising a deleting control step in which the data to be printed, stored in said spooling step, is retained after one of the formatting processes is completed and the data is deleted when both formatting processes are completed.

20. A method according to Claim 16, further comprising a printing manner setting step capable of performing setting associated with the first formatting and the second formatting at the same time via a user interface window.

21. A method according to Claim 20, wherein said printing manner setting step is capable of setting a page layout in the formatting.

22. A method according to Claim 20, wherein
said predetermined printing mode is a presentation mode; and
said image representing data producing step produces presentation copy data to be subjected to first formatting and also produces distribution document data to be subjected to second formatting.

23. A method according to Claim 22, wherein
said printing manner setting step is capable of setting the number of sets of distribution copy data; and
said image representing data producing step produces as many sets of distribution copy data to be subjected to the second formatting as the number of sets specified in said printing manner setting step.

24. A method according to Claim 22, wherein said printing manner setting step is capable of further specifying whether a memo space is to be inserted into the distribution copy data, and wherein in the case where a memo space is specified to be inserted, said printing manner setting step produces image representing data including a logical page representing a memo space when producing the distribution copy data.

25. A storage medium on which a printer driver program for producing print data to be printed by a printing apparatuses stored, said printer driver program comprising:
a spooling step for temporarily storing input data to be printed;
a determining step for determining a printing mode which has been set;
a image representing data producing step for, in the case where it is determined in said determining step that a predetermined printing mode has been set, first image representing data to be subjected to first formatting and second image representing data to be subjected to second formatting are produced on the basis of said data stored; and
a print data producing step for producing one set of print data from the first image representing data and the second image representing data produced in said image representing data producing step.

26. A storage medium according to Claim 25, wherein
said first formatting is a process of placing one logical page of said data to be printed on one logical page of image representing data and said second formatting is a process of placing a plurality of logical pages of said data to be printed on one logical page of image representing data.

27. A storage medium according to Claim 26, wherein
said image representing data is a GDI function;
said image representing data producing step outputs the generated image representing data to image representing means of an operating system; and
said print data producing step produces print data depending upon a printer language in accordance with the GDI function received from the image representing means of the operating system.

28. A storage medium according to Claim 25, said printer driver program further comprising a deleting control step in which the data to be printed, stored in said spooling step, is retained after one of the formatting processes is completed and the data is deleted when both formatting processes are completed.

29. A storage medium according to Claim 25, said printer driver program further comprising printing manner setting step capable of performing setting associated with the first formatting and the second formatting at the same time via a user interface window.

30. A storage medium according to Claim 29, wherein said printing manner setting step is capable of setting a page layout in the formatting.

31. A storage medium according to Claim 29, wherein
said predetermined printing mode is a presentation mode; and
said image representing data producing step produces presentation copy data to be subjected to first formatting and also produces distribution document data to be subjected to second formatting.

32. A storage medium according to Claim 31, wherein
said printing manner setting step is capable of setting the number of sets of distribution copy data; and
said image representing data producing step produces as many sets of distribution copy data to be subjected to the second formatting as the number of sets specified in said printing manner setting step.

33. A storage medium according to Claim 31, wherein said printing manner setting step is capable of further specifying whether a memo space is to be inserted into the distribution copy data, and wherein in the case where a memo space is specified to be inserted, said printing manner setting step produces image representing data including a logical page representing a memo space when producing the distribution copy data.

34. A printer driver program for producing print data to be printed by a printing apparatus, said printer driver program comprising:
a spooling step for temporarily storing input data to be printed;
a determining step for determining a printing mode which has been set;
a image representing data producing step for, in the case where it is determined in said determining step that a predetermined printing mode has been set, first image representing data to be subjected to first formatting and second image representing data to be subjected to second formatting are produced on the basis of said data stored; and
a print data producing step for producing one set of print data from the first image representing data and the second image representing data produced in said image representing data producing step.

35. A printer driver program according to Claim 34, wherein
said first formatting is a process of placing one logical page of said data to be printed on one logical page of image representing data and said second formatting is a process of placing a plurality of logical pages of said data to be printed on one logical page of image representing data.

36. A printer driver program according to Claim 35, wherein
said image representing data is a GDI function;
said image representing data producing step outputs the generated image representing data to image representing means of an operating system; and
said print data producing step produces print data depending upon a printer language in accordance with the GDI function received from the image representing means of the operating system.

37. A printer driver program according to Claim 34, said printer driver program further comprising: a deleting control step in which the data to be printed, stored in said spooling step, is retained after one of the formatting processes is completed and the data is deleted when both formatting processes are completed.

38. A printer driver program according to Claim 34, said printer driver program further comprising printing manner setting step capable of performing setting associated with the first formatting and the second formatting at the same time via a user interface window.

39. A printer driver program according to Claim 38, wherein said printing manner setting step is capable of setting a page layout in the formatting.

40. A printer driver program according to Claim 39, wherein
said predetermined printing mode is a presentation mode; and
said image representing data producing step produces presentation copy data to be subjected to first formatting and also produces distribution document data to be subjected to second formatting.

41. A printer driver program according to Claim 40, wherein
said printing manner setting step is capable of setting the number of sets of distribution copy data; and
said image representing data producing step produces as many sets of distribution copy data to be subjected to the second formatting as the number of sets specified in said printing manner setting step.

42. A printer driver program according to Claim 40, wherein said printing manner setting step is capable of further specifying whether a memo space is to be inserted into the distribution copy data, and wherein in the case where a memo space is specified to be inserted, said printing manner setting step produces image representing data including a logical page representing a memo space when producing the distribution copy data.

43. An information processing apparatus for producing print data to be printed by a printing apparatus, comprising:
setting means capable of setting a plurality of output formats for one piece of data to be printed;
producing means for producing, from the data to be printed, a plurality of print jobs including print data corresponding to the plurality of output formats set by said setting means; and
execution control means for controlling execution such that printing is executed in accordance with the plurality of print jobs produced by said producing means.

44. An information processing apparatus according to Claim 43, wherein said setting means is capable of setting a combination of predetermined output formats.

45. An information processing apparatus according to Claim 44, wherein said combination of predetermined output formats includes a first output format in which one page is output on one sheet and a second output format in which a plurality of pages are output on one sheet.

46. An information processing apparatus according to Claim 43, wherein said setting means is capable of setting an arbitrary combination of output formats.

47. An information processing apparatus according to Claim 43, wherein said producing means comprises:
storing means for storing, in a predetermined data format, said data to be printed and output form information indicating the plurality of output format set by said setting means;
converting means for converting the data to be printed stored in the predetermined data format in said storing means into print data so as to obtain printing outputs in the output formats indicated by the output form information stored in the said storing means; and
print job producing means for producing a plurality of print jobs by producing, using said converting means, print data corresponding to the respective output formats set by said setting means.

48. An information processing apparatus according to Claim 43, wherein said execution control means transmits the print job produced by said producing means to the printing apparatus.

49. A method of controlling an information processing apparatus for producing print data to be printed by a printing apparatus, said method comprising:
setting step capable of setting a plurality of output formats for one piece of data to be printed;
producing step for producing, from the data to be printed, a plurality of print jobs including print data corresponding to the plurality of output formats set in said setting step; and
execution control step for controlling execution such that printing is executed in accordance with the plurality of print jobs produced in said producing step.

50. A method according to Claim 48, wherein said setting step is capable of setting a combination of predetermined output formats.

51. A method according to Claim 50, wherein
said combination of predetermined output formats includes a first output format in which one page is output on one sheet and a second output format in which a plurality of pages are output on one sheet.

52. A method according to Claim 49, wherein said setting step is capable of setting an arbitrary combination of output formats.

53. A method according to Claim 49, wherein said producing step comprises:
a storing step for storing, in a predetermined data format, said data to be printed and output form information indicating the plurality of output format set in said setting step;
a converting step for converting the data to be printed stored in the predetermined data format in said storing step into print data so as to obtain printing outputs in the output formats indicated by the output form information stored in the said storing step; and
a print job producing step for producing a plurality of print jobs by producing, using said converting step, print data corresponding to the respective output formats set in said setting step.

54. A method according to Claim 49, wherein said execution control step transmits the print job produced in said producing step to the printing apparatus.

55. A storage medium on which a program for producing print data to be printed by a printing apparatus is stored, said program comprising:
a setting step capable of setting a plurality of output formats for one piece of data to be printed;
a producing step for producing, from the data to be printed, a plurality of print jobs including print data corresponding to the plurality of output formats set in said setting step; and
an execution control step for controlling execution such that printing is executed in accordance with the plurality of print jobs produced in said producing step.

56. A storage medium according to Claim 55, wherein said setting step is capable of setting a combination of predetermined output formats.

57. A storage medium according to Claim 56, wherein said combination of predetermined output formats includes a first output format in which one page is output on one sheet and a second output format in which a plurality of pages are output on one sheet.

58. A storage medium according to Claim 55, wherein said setting step is capable of setting an arbitrary combination of output formats.

59. A storage medium according to Claim 55, wherein said producing step comprises:
a storing step for storing, in a predetermined data format, said data to be printed and output form information indicating the plurality of output format set in said setting step;
a converting step for converting the data to be printed stored in the predetermined data format in said storing step into print data so as to obtain printing outputs in the output formats indicated by the output form information stored in the said storing step; and
a print job producing step for producing a plurality of print jobs by producing, using said converting step, print data corresponding to the respective output formats set in said setting step.

60. A storage medium according to Claim 55, wherein said execution control step transmits the print job produced in said producing step to the printing apparatus.

61. A program for producing print data to be printed by a printing apparatus, comprising:
a setting step capable of setting a plurality of output formats for one piece of data to be printed;
a producing step for producing, from the data to be printed, a plurality of print jobs including print data corresponding to the plurality of output formats set in said setting step; and
an execution control step for controlling execution such that printing is executed in accordance with the plurality of print jobs produced in said producing step.

62. A program according to Claim 61, wherein said setting step is capable of setting a combination of predetermined output formats.

63. A program according to Claim 62, wherein said combination of predetermined output formats includes a first output format in which one page is output on one sheet and a second output format in which a plurality of pages are output on one sheet.

64. A program according to Claim 61, wherein said setting step is capable of setting an arbitrary combination of output formats.

65. A program according to Claim 61, wherein said producing step comprises:
a storing step for storing, in a predetermined data format, said data to be printed and output form information indicating the plurality of output format set in said setting step;
a converting step for converting the data to be printed stored in the predetermined data format in said storing step into print data so as to obtain printing outputs in the output formats indicated by the output form information stored in the said storing step; and
a print job producing step for producing a plurality of print jobs by producing, using said converting step, print data corresponding to the respective output formats set in said setting step.

66. A program according to Claim 61, wherein said execution control step transmits the print job produced in said producing step to the printing apparatus.
